# EUROPEAN PATENT APPLICATION

(11) **EP 2 916 483 A1**
(43) Date of publication of application: **09.09.2015**
(21) Application number: 13850096.2
(22) Date of filing: 30.10.2013
(51) Int. Cl.: H04L 9/32, H04L 29/06, G06Q 20/40

(54) **TRANSACTION SYSTEM AND TRANSACTION METHOD**

(30) Priority: 02.11.2012 CN 201210433981
(71) Applicant: Tendyron Corporation, Beijing 100083 (CN)
(72) Inventor: LI, Dongsheng, Beijing 100083 (CN)
(74) Representative: advotec.
(86) International application number: PCT/CN2013/086206
(87) International publication number: WO 2014/067456

(57) **Abstract**

Provided are a transaction system and a transaction method. The transaction system comprises: a first electronic signature tool for making a first signature on transaction data and sending the transaction data subjected to the first signature to a network bank server; the network bank server for receiving the transaction data sent by the first electronic signature tool having been subjected to the first signature and performing authentication thereon, and sending the transaction data to at least one second electronic signature tool after the authentication has passed; and the at least one second electronic signature tool for receiving the transaction data sent by the network bank server, performing verification on the transaction data, receiving confirmation information input by a user after the verification has passed, and making a second signature on the transaction data and sending the transaction data having been subjected to the second signature to the network bank server. The present invention ensures the security of a transaction process, realizes remote transaction in the case that a transaction initiation party and a transaction confirmation party are not present simultaneously, and is convenient to use and strong in security.

## Description

### FIELD

The present disclosure relates to a field of information security, and more particularly relates to a transaction system and a transaction method.

### BACKGROUND

In order to ensure the security of information in a bank transaction and a network transaction, an identity authentication for a user is required. As a device for verifying the user's identity, an electronic signature token is increasingly applied in many occasions (such as the bank transaction, the network transaction). At present, there is only one electronic signature token corresponding to an individual user or an enterprise user. If a transaction is performed by using this electronic signature token, there are following problems.
(1) There is a hidden danger that money in an enterprise account is transferred without permission since the electronic signature token of the enterprise user is kept by only one keeper.
(2) When the enterprise user performs an electronic transaction, the keeper of the electronic signature token must be present, otherwise the electronic transaction cannot be accomplished. Thus, it is inconvenient for the enterprise user due to the keeper's absence.

### SUMMARY

The present disclosure seeks to solve at least one of the above problems.

Accordingly, embodiments of an aspect of the present disclosure provide a transaction system. The transaction system includes: a first electronic signature token, configured to sign a first signature on transaction data so as to obtain first signed transaction data, and to send the first signed transaction data; a network bank server, configured to receive the first signed transaction data sent by the first electronic signature token, to verify the first signed transaction data, and to send the transaction data if the first signed transaction data is successfully verified; and at least one second electronic signature token, configured to receive the transaction data sent by the network bank server, to verify the transaction data, to receive a user confirmation if the transaction data is successfully verified, to sign a second signature on the transaction data so as to obtain second signed transaction data, and to send the second signed transaction data to the network bank server, in which the network bank server is further configured to verify the second signed transaction data, and to perform a transaction if the second signed transaction data is successfully verified.

With the transaction system according to embodiments of the present disclosure, a first signature is signed on the transaction data by the first electronic signature token hold by an initiator initiating a transaction, and then the transaction data is sent to the second electronic signature token hold by a transaction confirmation party for confirmation after the signed transaction data is verified by the network bank server, so as to complete the transaction. Since the first electronic signature token and the second electronic signature token are working together to perform the transaction, and there may be one or more second electronic signature tokens, such that the transaction data may be verified and confirmed by one or more transaction confirmation parties, a hidden danger of unauthorized transfer caused by the fact that the electronic signature token of an enterprise user is kept by only one keeper may be avoided, the security of the transaction and the enterprise account may be guaranteed, and a remote transaction may be accomplished even if at least one of the initiator and the transaction confirmation party is not present, thus enhancing the security and convenience.

Embodiments of another aspect of the present disclosure provide a transaction method. The transaction method comprises sending by a first electronic signature token first signed transaction data to a network bank server; verifying by the network bank server the first signed transaction data, and sending the transaction data to at least one second electronic signature token if the first signed transaction data is successfully verified; indicating by the at least one second electronic signature token the transaction data for confirming by a user; receiving by the at least one second electronic signature token a user confirmation input by the user after confirming that the transaction data is correct; signing by the at least one second electronic signature token a second signature on the transaction data to obtain at least one second signed transaction data and sending the at least one second transaction data to the network bank server; and verifying by the network bank server the at least one second signed transaction data, and performing a transaction if the at least one second signed transaction data is successfully verified.

With the transaction method according to embodiments of the present disclosure, a first signature is signed on the transaction data by the first electronic signature token hold by an initiator initiating a transaction, and then the transaction data is sent to the second electronic signature token hold by a transaction confirmation party for confirmation after the signed transaction data is verified by a network bank server, so as to complete the transaction. Since the first electronic signature token and the second electronic signature token are working together to perform the transaction, and there may be one or more second electronic signature tokens, such that the signed transaction data may be verified and confirmed by one or more transaction confirmation parties, a hidden danger of unauthorized transfer caused by the fact that the electronic signature token of an enterprise user is kept by only one keeper may be avoided, the security of the transaction and the enterprise account may be guaranteed, and a remote transaction may be accomplished even if at least one of the initiator and the transaction confirmation party is not present, thus enhancing the security and convenience.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
Fig. 1 is a block diagram of a transaction system according to an embodiment of the present disclosure;
Fig. 2 is a block diagram of a transaction system according to another embodiment of the present disclosure;
Fig. 3 is a flow chart of a transaction method according to an embodiment of the present disclosure;
Fig. 4 is a flow chart of a transaction method according to another embodiment of the present disclosure;
Fig. 5 is a flow chart of a transaction method according to yet another embodiment of the present disclosure.

### DETAILED DESCRIPTION

Reference will be made in detail to embodiments of the present disclosure, where the same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

In the description of the present disclosure, it should be understood that, terms such as "first" and "second" are used herein for purposes of description, and are not intended to represent or indicate relative importance or significance or to represent or indicate numbers or locations. In the description of the present disclosure, it should be understood that, unless specified or limited otherwise, terms such as "connected" and "coupled" should be understood broadly, and may be, for example, fixed connections, detachable connections, or integral connections; or may be mechanical or electrical connections; or may be direct connections or indirect connections via intervening structures, which can be understood by those skilled in the art according to specific situations. Moreover, in the description of the present invention, unless specified otherwise, "a plurality of" means two or more than two.

Any process or method described in a flow chart or described herein in other ways may be understood to include one or more modules, segments or portions of codes of executable instructions for achieving specific logical functions or steps in the process. Although the flow chart shows a specific order of execution, it is understood that the order of execution may differ from what is depicted. For example, the order of execution of two or more boxes may be scrambled relative to the order shown.

In the following, a transaction system and a transaction method according to embodiments of the present disclosure will be described in detail with reference to drawings.

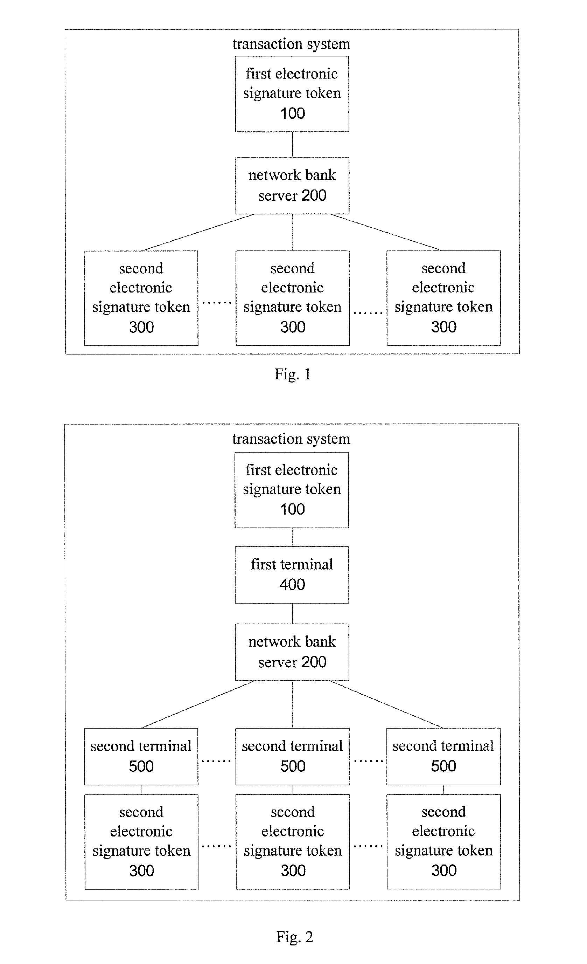

Fig. 1 is a block diagram of a transaction system according to an embodiment of the present disclosure.

As shown in Fig. 1, the transaction system according to embodiments of the present disclosure comprises a first electronic signature token 100, a network bank server 200 and a second electronic signature token 300. There is at least one second electronic signature token 300 in the transaction system, and each of the first electronic signature token 100 and the at least one second electronic signature token 300 may be a secret key device such as a USB key.

Specifically, the first electronic signature token 100 is configured to sign a first signature on transaction data so as to obtain first signed transaction data, and to send the first signed transaction data to the network bank server 200. For example, if an initiator initiates a transfer transaction, a first signature may be signed on the transaction data of the transfer transaction by the first electronic signature token 100 to obtain the first signed transaction data, and then the first signed transaction data may be sent by the first electronic signature token 100 to the network bank server 200. Of course, if the initiator initiates a transaction, the first electronic signature token 100 may sign the first signature on the transaction data using a password input by the initiator.

The network bank server 200 is configured to receive the first signed transaction data sent by the first electronic signature token 100, to verify the first signed transaction data, and to send the transaction data to the second electronic signature token 300 if the first signed transaction data is successfully verified.

The second electronic signature token 300 is configured to receive the transaction data sent by the network bank server 200, to verify the transaction data, to receive a user confirmation if the transaction data is successfully verified, to sign a second signature on the transaction data so as to obtain second signed transaction data, and to send the second signed transaction data to the network bank server 200. Then, the network bank server 200 is further configured to verify the second signed transaction data, and to perform a transaction if the second signed transaction data is successfully verified. In embodiments of the present disclosure, there may be one or more second electronic signature tokens 300. That is, when the transaction is performed, the transaction data may be verified and confirmed by one or more transaction confirmation parties. Each transaction confirmation party may obtain the transaction data using his own second electronic signature token 300, and may press an enter key after inputting a password possessed by himself or may press the enter key directly. The second electronic signature token 300 may sign the second signature on the transaction data according to the password input by the user or according to a predetermined cipher code obtained based on confirmation information sent by the enter key, and may send the second signed transaction data to the network bank server 200 for confirming the transaction. In this way, a hidden danger of unauthorized transfer caused by the fact that the electronic signature token of the enterprise user is kept by only one keeper may be avoided.

It should be understood that, in an embodiment of the present disclosure, in order to improve the execution efficiency of the transaction, the network bank server 200 is further configured to receive a plurality of second signed transaction data sent by a plurality of second electronic signature tokens 300, to verify the plurality of second signed transaction data respectively and to perform the transaction if a predetermined percentage of the plurality of second signed transaction data is successfully verified. For example, the network bank server 200 receives five second signed transaction data sent by five second electronic signature tokens 300 respectively and verifies the five second signed transaction data respectively, and if three second signed transaction data is successfully verified, then the transaction is performed. For another example, there are five second electronic signature tokens 300 in the transaction system, if the network bank server 200 only receives three second signed transaction data sent by three second electronic signature tokens 300 and all the three second signed transaction data is successfully verified, then the transaction is performed. The predetermined percentage may be preset by the user according to the user's requirement or may be a default value of the network bank server 200.

With the transaction system according to embodiments of the present disclosure, a first signature is signed on the transaction data by the first electronic signature token hold by an initiator initiating a transaction, and then the transaction data is sent to the second electronic signature token hold by a transaction confirmation party for confirmation after the signed transaction data is verified by a network bank server, so as to complete the transaction. Since the first electronic signature token and the second electronic signature token are working together to perform the transaction, and there are one or more second electronic signature tokens, such that the first signed transaction data may be verified and confirmed by one or more transaction confirmation parties, a hidden danger of unauthorized transfer caused by the fact that the electronic signature token of an enterprise user is kept by only one keeper may be avoided, the security of the transaction and the enterprise account may be guaranteed, and a remote transaction may be accomplished even if at least one of the initiator and the transaction confirmation party is not present, thus enhancing the security and convenience.

Fig. 2 is a block diagram of a transaction system according to another embodiment of the present disclosure.

As shown in Fig. 2, based on the transaction system illustrated in Fig. 1, the transaction system according to embodiments of the present disclosure further comprises a first terminal 400 and a second terminal 500. There may be one or more second terminals 500, and a number of the second terminals 500 is equal to a number of the second electronic signature tokens 300. Each of the first terminal 400 and the second terminal 500 may be a smart phone, a tablet PC, a laptop, a personal computer and so on.

The first terminal 400 is configured to receive the first signed transaction data sent by the first electronic signature token 100, and to forward the first signed transaction data to the network bank server 200.

Each second terminal 500 corresponds to one second electronic signature token 300, and is configured to receive the transaction data sent by the network bank server 200, to forward the transaction data to the second electronic signature token 300, to receive the second signed transaction data sent by the second electronic signature token 300, and to forward the second signed transaction data to the network bank server 200.

With the transaction system according to this embodiment, the transaction data may be transmitted between the first electronic signature token and the network bank server via the first terminal, and may be transmitted between the second electronic signature token and the network bank server via the second terminal, such that an electronic transaction may be accomplished whenever and wherever the user wants, thus enhancing the convenience of the electronic transaction.

In some embodiments of the present disclosure, the first electronic signature token 100 is further configured to send a pre-stored identification of the first electronic signature token 100 to the network bank server 200, and the network bank server 200 is further configured to send the identification of the first electronic signature token 100 to the at least one second electronic signature token 300, and the at least one second electronic signature token 300 is further configured to confirm the identification of the first electronic signature token 100. The pre-stored identification of the first electronic signature token 100 may be configured to determine an identity of the first electronic signature token 100 uniquely. Therefore, during the transaction, the network bank server 200 may determine the identity of the first electronic signature token 100 according to the identification of the first electronic signature token 100, such that an imposter may be prevented from sending transaction data, thus ensuring the security of the transaction.

In another embodiment of the present disclosure, the network bank server 200 is further configured to send a bank identification for the transaction to the at least one second electronic signature token 300, and the at least one second electronic signature token 300 is further configured to confirm the bank identification. The bank identification is configured to determine an identity of the bank uniquely. Therefore, a person may be prevented from impersonating a bank to send transaction data, such that it is ensured that the transaction data is real data sent by a bank, thus improving the security of the electronic transaction and improving the user experience.

In order to implement the above embodiments, the present disclosure provides a transaction method.

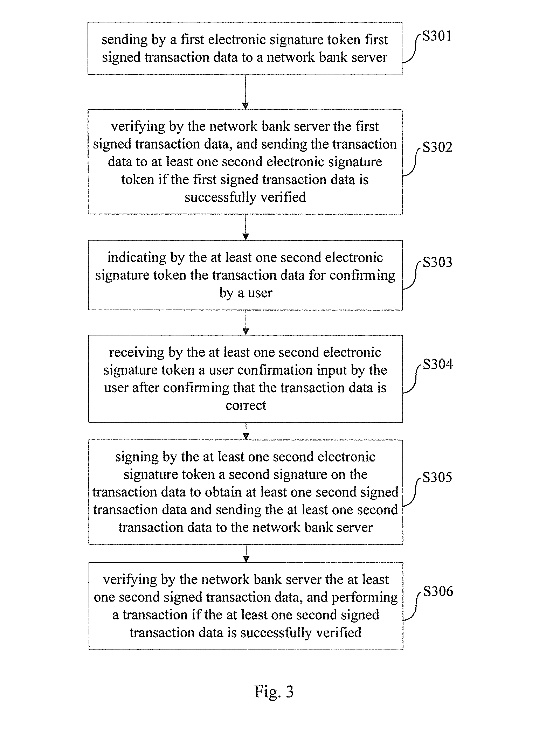

Fig. 3 is a flow chart of a transaction method according to an embodiment of the present disclosure.

As shown in Fig. 3, the transaction method according to embodiments of the present disclosure may comprise following steps.

At step S301, first signed transaction data is sent by a first electronic signature token to a network bank server.

For example, if an initiator initiates a transfer transaction, a first signature may be signed on the transaction data of the transfer transaction by the first electronic signature token to obtain the first signed transaction data, and then the first signed transaction data may be sent by the first electronic signature token to the network bank server. Of course, if the initiator initiates a transaction, the first electronic signature token may sign the first signature on the transaction data using a password input by the initiator.

In some embodiments of the present disclosure, the first electronic signature token may send the first singed transaction data to a first terminal firstly, and then the first signed transaction data is sent to the network bank server by the first terminal.

At step S302, the first signed transaction data is verified by the network bank server, and the transaction data is sent to at least one second electronic signature token if the first signed transaction data is successfully verified.

In some embodiments of the present disclosure, the network bank server may send the transaction data to at least one second terminal firstly, and then the transaction data is sent to the at least one second electronic signature token by the at least one second terminal respectively.

Each of the first electronic signature token and the at least one second electronic signature token may be a secret key device such as a USB key. Each second terminal corresponds to one second electronic signature token. Each of the first terminal and the second terminal may be a smart phone, a tablet PC, a laptop, a personal computer and so on.

At step S303, the transaction data is indicated by the at least one second electronic signature token for confirming by a user.

For example, one or more transaction confirmation parties may be required during the transaction. Each transaction confirmation party may obtain the transaction data by the second electronic signature token possessed by himself. The second electronic signature token may indicate the transaction data for confirming by the user by displaying or broadcasting the transaction data.

At step S304, a user confirmation input by the user after confirming that the transaction data is correct is received by the at least one second electronic signature token.

The user confirmation may be sent by the user through pressing an enter key directly or pressing the enter key after inputting a password.

At step S305, a second signature is signed by the at least one second electronic signature token on the transaction data to obtain at least one second signed transaction data and the at least one second transaction data is sent respectively by the at least one electronic signature token to the network bank server.

If the user confirmation is sent by the user through pressing the enter key after inputting the password, the second electronic signature token verifies whether the password is correct firstly. And if the password is correct, the second electronic signature token signs the second signature on the transaction data according to the password to obtain the second signed transaction data, and sends the second signed transaction data to the network bank server. If the user confirmation is sent by the user through pressing the enter key directly, the second electronic signature token signs the second signature on the transaction data according to a predetermined cipher code so as to obtain the second signed transaction data, and sends the second signed transaction data to the network bank server.

At step S306, the at least one second signed transaction data is verified by the network bank server, and a transaction is performed if the at least one second signed transaction data is successfully verified.

In some embodiments of the present disclosure, there may be one or more second electronic signature tokens. That is, when the transaction is performed, the transaction data may be verified and confirmed by one or more transaction confirmation parties. Each transaction confirmation party may obtain the transaction data by the second electronic signature token possessed by himself, and may input the password possessed by himself according to the transaction data. The second electronic signature token may sign the second signature on the transaction data according to the password so as to obtain second signed transaction data, and may send the second signed transaction data to the network bank server for confirming the transaction. In this way, a hidden danger of unauthorized transfer caused by the fact that the electronic signature token of an enterprise user is kept by only one keeper may be avoided.

In an embodiment of the present disclosure, when the network bank server verifies the plurality of second signed transaction data sent by the plurality of second electronic signature tokens, the transaction may be performed if a predetermined percentage of the plurality of second signed transaction data is successfully verified. For example, the network bank server receives five second signed transaction data sent by five second electronic signature tokens and verifies the five second signed transaction data respectively, and if three second signed transaction data is successfully verified, then the transaction is performed. The predetermined percentage may be preset by the user according to the user's requirement or may be a default value of the network bank server.

With the transaction method according to embodiments of the present disclosure, a first signature is signed on the transaction data by the first electronic signature token hold by an initiator initiating a transaction, and then the transaction data is sent to the second electronic signature token hold by a transaction confirmation party for confirmation after the signed transaction data is verified by a network bank server, so as to complete the transaction. Since the first electronic signature token and the second electronic signature token are working together to perform the transaction, and there may be one or more second electronic signature tokens, such that the transaction data may be verified and confirmed by one or more transaction confirmation parties, a hidden danger of unauthorized transfer caused by the fact that the electronic signature token of an enterprise user is kept by only one keeper may be avoided, the security of the transaction and the enterprise account may be guaranteed, and a remote transaction may be accomplished even if at least one of the initiator and the transaction confirmation party is not present, thus enhancing the security and convenience.

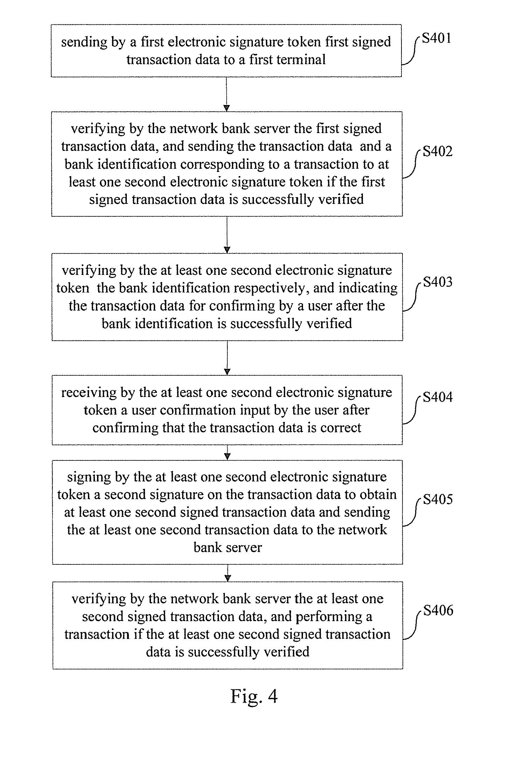

Fig. 4 is a flow chart of a transaction method according to another embodiment of the present disclosure.

As shown in Fig. 4, the transaction method according to embodiments of the present disclosure comprises following steps.

At step S401, first signed transaction data is sent by a first electronic signature token to a network bank server.

At step S402, the first signed transaction data is verified by the network bank server, and the transaction data and a bank identification corresponding to a transaction are sent to at least one second electronic signature token if the first signed transaction data is successfully verified. The bank identification is configured to determine an identity of the bank uniquely.

At step S403, the bank identification is verified by the at least one second electronic signature token respectively, and the transaction data is indicated for confirming by a user after the bank identification is successfully verified.

At step S404, a user confirmation input by the user after confirming that the transaction data is correct is received by the at least one second electronic signature token.

At step S405, a second signature is signed by the at least one second electronic signature token on the transaction data to obtain at least one second signed transaction data and the at least one second transaction data is sent respectively by the at least one second electronic signature token to the network bank server.

At step S406, the at least one second signed transaction data is verified by the network bank server, and the transaction is performed if the at least one second signed transaction data is successfully verified.

With the transaction method according to this embodiment, an identity of the bank may be determined uniquely from the bank identification. Therefore, a person may be prevented from impersonating a bank to send transaction data, such that it is ensured that the transaction data is real data sent by a bank, thus improving the security of the electronic transaction.

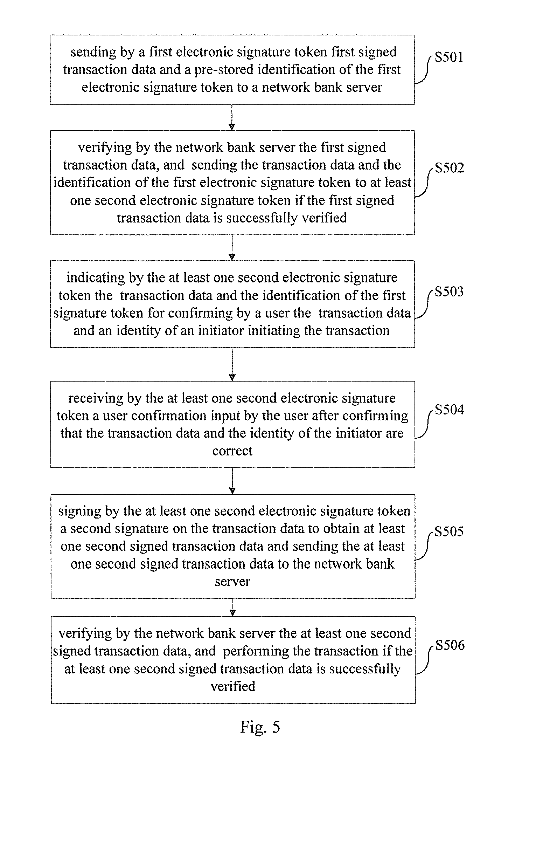

Fig. 5 is a flow chart of a transaction method according to yet another embodiment of the present disclosure.

As shown in Fig. 5, the transaction method according to embodiments of the present disclosure may comprise following steps.

At step S501, first signed transaction data and a pre-stored identification of a first electronic signature token are sent by the first electronic signature token to a network bank server. The identification of the first electronic signature token may be configured to determine an identity of the first electronic signature token uniquely.

At step S502, the first signed transaction data is verified by the network bank server, and the transaction data and the identification of the first electronic signature token are sent to at least one second electronic signature token if the first signed transaction data is successfully verified.

At step S503, the transaction data and the identification of the first electronic signature token are indicated by the at least one second electronic signature token for confirming by a user the transaction data and an identity of an initiator initiating the transaction.

At step S504, a user confirmation input by the user after confirming that the transaction data and the identity of the initiator are correct is received by the at least one second electronic signature token.

At step S505, a second signature is signed by the at least one second electronic signature token on the transaction data to obtain at least one second signed transaction data and the at least one second transaction data is sent to the network bank server.

At step S506, the at least one second signed transaction data is verified by the network bank server, and the transaction is performed if the at least one second signed transaction data is successfully verified.

With the transaction method according to this embodiment, during the transaction, the network bank server may determine an identity of the first electronic signature token according to the identification of the first electronic signature token, such that an imposter may be prevented from sending transaction data, thus ensuring the security of the transaction.

It should be understood that, a combination of the transaction method illustrated in Fig. 4 and the transaction method illustrated in Fig. 5 may be implemented, that is, the identification of the first electronic signature token and the bank identification are used together to further ensure the security of a transaction.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A transaction system, comprising:
a first electronic signature token, configured to sign a first signature on transaction data so as to obtain first signed transaction data, and to send the first signed transaction data;
a network bank server, configured to receive the first signed transaction data sent by the first electronic signature token, to verify the first signed transaction data, and to send the transaction data if the first signed transaction data is successfully verified; and
at least one second electronic signature token, configured to receive the transaction data sent by the network bank server, to verify the transaction data, to receive a user confirmation if the transaction data is successfully verified, to sign a second signature on the transaction data so as to obtain second signed transaction data, and to send the second signed transaction data to the network bank server,
wherein the network bank server is further configured to verify the second signed transaction data, and to perform a transaction if the second signed transaction data is successfully verified.

2. The transaction system according to claim 1, further comprising:
a first terminal, configured to receive the first signed transaction data sent by the first electronic signature token, and to forward the first signed transaction data to the network bank server; and
at least one second terminal, wherein each second terminal corresponds to one second electronic signature token, and is configured to receive the transaction data sent by the network bank server, to forward the transaction data to the corresponding second electronic signature token, to receive the second signed transaction data sent by the corresponding second electronic signature token, and to forward the second signed transaction data to the network bank server.

3. The transaction system according to claim 1, wherein the first electronic signature token is further configured to send a pre-stored identification of the first electronic signature token to the network bank server, and the network bank server is further configured to send the identification of the first electronic signature token to the at least one second electronic signature token, and the at least one second electronic signature token is further configured to confirm the identification of the first electronic signature token.

4. The transaction system according to claim 1, wherein the network bank server is further configured to send a bank identification for the transaction to the at least one second electronic signature token, and the at least one second electronic signature token is further configured to confirm the bank identification.

5. The transaction system according to claim 1, wherein the system comprises a plurality of second electronic signature tokens.

6. The transaction system according to claim 1, wherein the network bank server is further configured to receive a plurality of second signed transaction data sent by the plurality of second electronic signature tokens, to verify the plurality of second signed transaction data respectively and to perform the transaction if a predetermined percentage of the plurality of second signed transaction data is successfully verified.

7. A transaction method, comprising:
sending by a first electronic signature token first signed transaction data to a network bank server;
verifying by the network bank server the first signed transaction data, and sending the transaction data to at least one second electronic signature token if the first signed transaction data is successfully verified;
indicating by the at least one second electronic signature token the transaction data for confirming by a user;
receiving by the at least one second electronic signature token a user confirmation input by the user after confirming that the transaction data is correct;
signing by the at least one second electronic signature token a second signature on the transaction data to obtain at least one second signed transaction data and
sending the at least one second transaction data to the network bank server; and verifying by the network bank server the at least one second signed transaction data, and performing a transaction if the at least one second signed transaction data is successfully verified.

8. The transaction method according to claim 7, further comprising:
sending by the first electronic signature token the first signed transaction data to a first terminal;
forwarding by the first terminal the first signed transaction data to the network bank server.

9. The transaction method according to claim 7, further comprising:
sending by the network bank server the transaction data to at least one second terminal;
forwarding by the at least one second terminal the transaction data to the at least one second electronic signature token respectively.

10. The transaction method according to claim 7, further comprising:
sending a bank identification for the transaction to the at least one second electronic signature token when the transaction data is sent by the network bank server to the at least one second electronic signature token;
verifying by the at least one second electronic signature token the bank identification, and indicating the transaction data if the bank identification is successfully verified.

11. The transaction method according to claim 7, further comprising:
sending a pre-stored identification of the first electronic signature token to the network bank server when the first signed transaction data is sent by the first electronic signature token to the network bank server;
sending by the network bank server the identification of the first electronic signature token to the at least one second electronic signature token;
indicating by the at least one second electronic signature token the identification of the first electronic signature token such that the user confirms an identity of an initiator initiating the transaction.

12. The transaction method according to claim 7, wherein when the network bank server verifies a plurality of second signed transaction data sent by a plurality of second electronic signature tokens, the transaction is performed if a predetermined percentage of the plurality of second signed transaction data is successfully verified.
